# EUROPEAN PATENT APPLICATION

(11) **EP 4 678 911 A1**
(43) Date of publication of application: **14.01.2026**
(21) Application number: 24382749.0
(22) Date of filing: 12.07.2024
(51) Int. Cl.: F03D 15/10, F16H 57/08

(54) **WIND TURBINE GEARBOX AND METHOD OF MOUNTING A WIND TURBINE GEARBOX**

(71) Applicant: Siemens Gamesa Renewable Energy Innovation & Technology S.L., 31621 Sarriguren (Navarra) (ES)
(72) Inventor: Saenz De Ugarte Sevilla, Patrik, 48940 Leioa (Bizkaia) (ES)
(74) Representative: SGRE-Association

(57) **Abstract**

The invention relates to wind turbine gearbox (7) for transmitting torque from a rotor (4) to a generator (9) comprising a planet carrier (20), at least three planet shafts (30), at least three planet wheels (40) mounted on the planet shafts (30), a hollow wheel (45) and at least three pairs of elastic elements (34), wherein the planet wheels (40) mesh with the hollow wheel (45). The pairs of elastic elements (34) are mounted in the planet carrier (20), and both ends of each planet shaft (30) are mounted in at least one elastic element (34) and each elastic element (34) is mounted in the planet carrier (20).

## Description

The present invention relates to a wind turbine gearbox for transmitting torque from a wind rotor to a generator. The present invention further relates to a wind turbine comprising said wind turbine gearbox. The present invention further relates to a method of mounting a wind turbine gearbox.

Wind turbines are increasingly used for the generation of electrical energy. A wind turbine typically comprises a tower and a nacelle mounted on the tower, to which a rotor is attached. The rotor is coupled to a generator. A plurality of rotor blades extends from the rotor. The blades are oriented in such a way that wind passing over the blades turns the rotor and rotates the rotor shaft, thereby driving the generator to generate electricity.

Wind turbines are in continuous development due to advancements in technology and energy harvesting. Hence, new-generation wind turbines have increased in size compared to older ones. In the majority of modern large wind turbines, a gearbox is arranged between the wind rotor and the generator to reduce the large torque on the rotor side by increasing the speed on the generator side. The wind turbine gearbox is one of the components which has greatly increased in size as the increased rotor torque and rotor power must be transmitted by the gearbox.

A larger gearbox significantly increases the weight of the wind turbine nacelle, creating a need for larger cranes being able to lift the nacelle on the tower top. In addition, a larger gearbox increases the size of the nacelle, the dimensions of which are limited by the need of transport on public roads with severe limits on width and heights.

Usually, the torque in wind turbine gearboxes is transmitted from the rotor shaft via an input shaft connection to a planet carrier of a first gearbox planet stage. To the planet carrier, planet shafts with rotatably mounted planet wheels are attached. A detachable connection between the planet carrier and the planet shafts allows the demounting of the gearbox planet stage for maintenance purposes, e.g., for exchanging the planet bearings. This detachable connection is usually a critical stress concentration point in the gearbox design, as it is highly loaded and must fix the planet shafts as precise as possible to avoid tolerances leading to unsymmetrical loading of the planet wheels of the planet stage.

Other solutions in planet stage design are proposing a flexible mounting of the planet wheels with respect to the planet carrier, mostly by introducing flexibility in the planet shafts, known in the industry under the key words of "flex pin" and "bogie shaft". In this way, planet wheels should be able to adjust their position to prevent unsymmetric loading of the planet wheels. These proposals use complicated structural designs to provide the flexibility in steel parts leading to weak structures vulnerable to rupture, thus increasing the manufacturing and maintenance costs for the gearbox.

It is therefore an object of the invention to provide an improved design of a wind turbine gearbox avoiding the disadvantages of the state of the art. It is in particular an object of the invention to avoid critical stress concentration zones in a planet carrier and to ensure a symmetric loading in all planet wheels for allowing higher torque transmission in a given gearbox size. It is a further object to reduce the size and the weight of a planet stage of a wind turbine gearbox and to improve the maintainability of a wind turbine gearbox.

This is achieved by a wind turbine gearbox according to claim 1, a wind turbine according to claim 12 and a method of mounting a wind turbine gearbox according to claim 13.

According to the invention, a wind turbine gearbox for transmitting torque from a rotor to a generator comprises a planet carrier, at least three planet shafts, at least three planet wheels mounted on the planet shafts, and a hollow wheel. The planet wheels mesh with the hollow wheel. The planet shafts are housed in the planet carrier and the planet wheels are placed inside the hollow wheel. Usually, the planet wheels are mounted on the planet shafts using planet bearings for reducing the friction between the planet wheels and the planet shafts. Gearboxes with more than three planet shafts and planet wheels are commonly used in wind turbines. Using five to eight planets will distribute the gearbox torque on more teeth engaged in the transmission, allowing advantageously to reduce the overall diameter of the gearbox. Nevertheless, there is always the risk with more than three planet wheels, that the load is not equally distributed on all planet wheels.

According to the invention, the wind turbine gearbox comprises at least three pairs of elastic elements. The pairs of elastic elements are mounted in the planet carrier, wherein both ends of each planet shaft are mounted in at least one elastic element and each elastic element is mounted in the planet carrier. By mounting the planet shafts with pairs of elastic elements in the planet carrier, the torque load is equally distributed on all the planet wheels as a high loaded planet wheel has the possibility to flex away. Additionally, the load is equally distributed over the full width of the planet wheel teeth as the pairs of the elastic elements allow the planet shaft to flex away on one side more than on the other in reaction to alignment problems between the planet wheel and the hollow wheel or the planet wheel and the sun wheel.

By using pairs of elastic elements between the planet carrier and the planet shafts, the manufacturing tolerances for the parts of the planet stage can be reduced, advantageously reducing the manufacturing costs. Furthermore, the rigid connection between planet shafts and planet carrier in the state of the art transmits all kind of vibrations coming out of the meshing of the planet wheels. Such vibrations significantly increase the noise level of wind turbines in the fields. By introducing elastic elements, the transmission of vibrations is significantly reduced.

Additionally, the highly loaded demountable connection between the planet carrier and the planet shaft of the prior art involves the risk of micro fretting, leading to corrosion under the difficult environmental conditions wind turbines are exposed to. A corroded planet shaft - planet carrier connection leads to dramatically increased maintenance efforts if during the 20-to-30-year lifetime the gearbox must be disassembled, e.g., for exchanging the planet bearings. All these disadvantages are mitigated by providing pairs of elastic elements between the planet shafts and the planet carrier.

According to a preferred embodiment of the invention, the elastic elements are of cylindrical shape with a central hole. In particular, the planet shafts are mounted inside the central hole and the outer surface of the cylinder is mounted in the planet carrier.

The cylindrical shape of the elastic elements allows for a simple, standardized manufacturing process for the elastic elements itself as well as for the planet carrier, as a simple bore of the right diameter is easy to manufacture allowing to receive the elastic elements in a simple and exactly defined position. Mounting the planet shafts inside the central hole of the elastic elements allows in the same way for a simple and reliable connection between the planet shafts and the elastic elements.

According to another preferred embodiment of the invention, the elastic elements comprise at least an elastomer ring. Providing an elastomer ring for the flexible mounting of the planet shafts in the planet carrier advantageously allows for a simple design of the elastic element, as elastomer rings are well proven parts in many industrial applications which are extremely durable against dynamic loading in all directions.

Additionally, elastomer rings introduce significant damping in the structure, thus advantageously dampening the transmission of vibrations and noise produced by the planet wheels in the wind turbine gearbox as close as possible to the origin of the vibrations.

According to another preferred embodiment of the invention, the elastic elements further comprise a metallic inner ring and/or a metallic outer ring. In particular, the elastomer ring is joint with the metallic inner ring and/or the metallic outer ring. Joining the elastomer ring with a metallic inner ring or a metallic outer ring advantageously allows for a defined interface between the elastic element and the adjacent component. The joining is preferably achieved by a vulcanization process during manufacturing of the elastic elements. Vulcanization advantageously provides a reliable and durable connection between elastomer rings and metal rings.

In a preferred embodiment, the elastomer ring is joined with a metallic inner ring and a metallic outer ring allowing for easy assembly of the gearbox with precisely defined interfaces to all adjacent components.

In another preferred embodiment of the invention, the elastomer ring is precalibrated. Precalibrating the elastomer ring means that the elastomer ring is prestressed when mounted in the gearbox. Prestressing the elastomer ring gives high durability against dynamic loading. As elastomer materials have only limited resistance against tension loads, the prestressing of the elastomer is preferably applied on a level that in normal operation only shear and compression loads are present in the elastomer material and only in rare extreme load situations, tension loads are present inside the elastomer ring.

In another preferred embodiment of the invention, the elastomer ring comprises rubber, in particular NBR rubber or a fluoroelastomer. As the application in a planet carrier of wind turbine gearbox implies high dynamic loading for extremely long duration (20 to 30 years lifetime), NBR rubber is a perfect material as it is highly flexible and particularly durable against high dynamic loading. But NBR needs to be protected against temperature above 100°C and long-term exposure of petroleum oils. If the gearbox design does not allow such a protection, a fluoroelastomer is a better material choice, as fluoroelastomer materials are highly resistant against chemicals. Such fluoroelastomer materials are known to the expert, e.g. under the trademark name "Viton" rubber.

In another preferred embodiment of the invention, the elastomer ring comprises at least two ring segments. Designing the elastomer ring in segments, like two parts covering each about 180° of the ring or three parts covering each about 120° advantageously allows for easier manufacturing and handling of the parts when mounting or demounting the wind turbine gearbox. Additionally, the precalibration of the elastomer ring during manufacture is easier if the elastomer ring is segmented.

In another preferred embodiment of the invention, the elastic element comprises a plurality of elastomer rings. Providing a plurality of elastomer rings advantageously allows for adjusting the stiffness of the elastic element by combining different numbers of elastomer rings or by combining elastomer rings with different material stiffnesses. By combining different numbers of elastomer rings of different stiffnesses, with only a few number of different elastomer rings a large number of different stiffnesses of the elastic element advantageously can be realized, allowing for easy tuning of the overall behavior of the planet stage of the wind turbine gear box. Additionally, the manufacturing process can be optimized as standardized elastomer rings can be used for different applications.

In another preferred embodiment of the invention, the planet carrier has a rotor side plate and a generator side plate which are integrally connected by columns. Integrally connected defines that the rotor side plate and the generator side plate and the columns are manufactured in one piece, preferably in a casting process.

Providing a planet carrier with a rotor side plate and a generator side plate which are integrally connected by columns advantageously allows for a rigid design of the planet carrier. This is particularly important as the planet shafts with their elastic mounting do not contribute to the rigidity of the planet carrier as in the usual prior art.

Advantageously, in such an embodiment of the invention, the first elastic element of each pair of elastic elements is mounted to the rotor side plate of the planet carrier and the second elastic element of each pair of elastic elements is mounted to the generator side plate of the planet carrier.

In another preferred embodiment, the two elastic elements of each pair of elastic elements are of identical shape and dimensions. This allows advantageously for symmetric behavior of the elasticity of the mounting of the planet shaft in the planet carrier. In addition, identical elastic elements on the rotor side and the generator side of the planet carrier reduce the effort for manufacturing and spare part supply and are for that reason more economic.

In another preferred embodiment of the invention, the elastic element is sealed against an inner space of the wind turbine gearbox. Sealing the elastic element against the inner space of the gearbox advantageously protects the elastic material against the lubrication fluids inside the gearbox. This is important for elastomer materials like NBR rubber as indicated above.

In another preferred embodiment of the invention, the planet wheels are mounted on the planet shafts with journal bearings. Using journal bearings for the planet bearings allows for a very compact design of the planet stage, enabling the wind turbine gearbox to transmit more torque with a given gearbox outer diameter. In addition, combining the journal bearings with the inventive elastic mounting of the planet shafts involves a synergetic effect: journal bearings are sensitive for non-symmetric loads, e.g., resulting out of unequal load distribution over the width of the planet wheel teeth. These unwanted parasitic loads are eliminated by the pair of elastic elements allowing the planet shaft to incline to realize a perfect load distribution over the full width of the planet wheel teeth. So, the combination of the pairs of elastic elements for mounting the planet shafts and the journal bearings allows for higher torque transmission compared just to the benefit resulting out of both single features.

Another aspect of the invention relates to a wind turbine comprises a wind turbine gearbox according to the invention.

Another aspect of the invention relates to a method of mounting a wind turbine gearbox comprising the steps of mounting the rotor side elastic element in the planet carrier, placing the planet wheel with the planet bearing inside the planet carrier, pushing the planet shaft through the planet wheel and the planet bearing, and mounting the elastic element on the generator side of the planet carrier.

In particular, a wind turbine gearbox, for transmitting torque from a rotor to a generator, comprises a planet carrier, at least three planet shafts, at least three planet wheels mounted on the planet shafts, and a hollow wheel. The planet wheels mesh with the hollow wheel. The planet shafts are housed in the planet carrier and the planet wheels are placed inside the hollow wheel. Usually, the planet wheels are mounted on the planet shafts using planet bearings for reducing the friction between the planet wheels and the planet shafts. Gearboxes with more than three planet shafts and planet wheels are commonly used in wind turbines. Using five to eight planets will distribute the gearbox torque on more teeth engaged in the transmission, allowing advantageously to reduce the overall diameter of the gearbox. Nevertheless, there is always the risk with more than three planet wheels, that the load is not equally shared on all planet wheels.

According to the invention, the wind turbine gearbox comprises at least three pairs of elastic elements. The pairs of elastic elements are mounted in the planet carrier, wherein both ends of each planet shaft are mounted in at least one elastic element and each elastic element is mounted in the planet carrier. By mounting the planet shafts with pairs of elastic elements in the planet carrier, the torque load is equally distributed on all the planet wheels as a high loaded planet wheel has the possibility to flex away.

Preferably, for the method of mounting the wind turbine gearbox, the rotor side elastic element is mounted in the first step, as the accessibility to the rotor side elastic element is best when no other parts are mounted on the planet carrier. Alternatively, the rotor side elastic element is mounted on the planet shaft before pushing it through the planet wheel. This alternative puts geometric constraints on the outer diameter of the rotor side elastic element, as it needs to pass through the planet wheel.

Pushing the planet shaft through the planet wheels including planet bearings again does not put any geometric constraints on the size of the planet bearings. Alternatively, the planet bearings can be premounted on the planet shaft, but in this case, the outer diameter of the planet bearings must be smaller than the outer diameter of the generator side elastic element.

In a preferred embodiment of the invention, the method further comprises turning the planet carrier in a position with the rotation axis vertically and the generator side plate of the planet carrier upside, or at least locally heating up the planet carrier, or at least locally cooling down the planet shaft. By turning the planet carrier in a position with the rotating axis vertically and the generator side plate upside, the mounting of the elastic elements and the planet shafts can be advantageously performed in the direction of the gravity force. The planet shaft can be easily hung in a crane and needs only to be lowered inside the planet carrier, thus avoiding any risk of canting the planet shaft.

Heating up the planet carrier locally or completely allows for easier mounting of the elastic elements, as the bores in the planet carrier advantageously will slightly increase in diameter with rising temperature. Preferably, measures to control the heating temperature of the planet carrier are applied to avoid that the elastic elements are overheated when mounted in the heated bore of the planet carrier.

Cooling down the planet shaft locally or completely allows for easier mounting of the elastic elements and the planet bearings, as the shaft diameter will slightly decrease with lower temperature.

In a preferred embodiment of the invention, the method further comprises mounting the generator side elastic element before pushing the planet shaft through the planet wheel. In this way, the accessibility to the generator side end of the planet shaft for mounting the elastic element is best when no other parts are mounted on the planet shaft.

Alternatively, the generator side elastic element is mounted when the planet shaft is pushed in place in the planet carrier, but this requires sliding the inner surface and the outer surface of the elastic element in place at the same time, making the procedure difficult to control.

In order to facilitate the understanding of the characteristics of the invention and being an integral part of this specification, some drawing sheets are attached on which figures, with an illustrative but not limiting character, the following is represented:
Figure 1 shows a wind turbine with a wind turbine gearbox for transmitting torque from a wind rotor to a generator according to the invention.
Figure 2 shows a planet stage of a wind turbine gearbox as known in the prior art.
Figure 3 shows a wind turbine gearbox according to a first embodiment of the invention in a perspective view.
Figure 4 shows the wind turbine gearbox of Figure 3 in a perspective sectional view.
Figure 5 shows another embodiment of a wind turbine gearbox according to the invention in a sectional view.
Figure 6 shows a further embodiment of a wind turbine gearbox according to the invention in a sectional view.
Figure 7 shows another embodiment of a wind turbine gearbox according to the invention in a sectional view.
Figure 8 a-c show three mounting steps of an embodiment of a wind turbine gearbox according to the invention in a sectional view

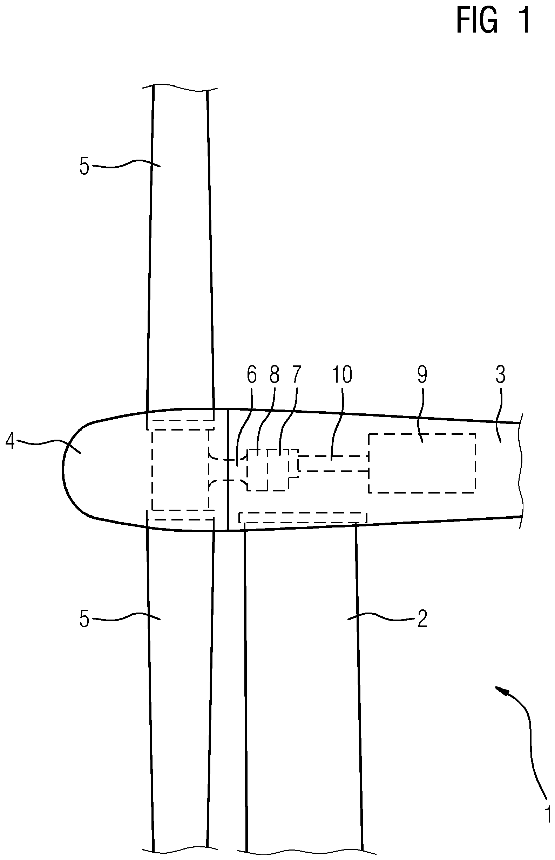

Figure 1 shows a wind turbine 1 with a tower 2 and a nacelle 3. Rotatably attached to the nacelle 3 is a wind rotor 4 with rotor blades 5. The torque generated by the rotor 4 is transmitted via the rotor shaft 6 to the wind turbine gearbox 7 comprising a planet stage 8. In the shown embodiment, the rotor shaft 6 is the input shaft for the planet stage 8. In other embodiments, the input shaft for the planet stage 8 might be a different shaft, e.g., an intermediate shaft. The output torque of the wind turbine gearbox 7 is transmitted via the high-speed shaft 10 to the generator 9.

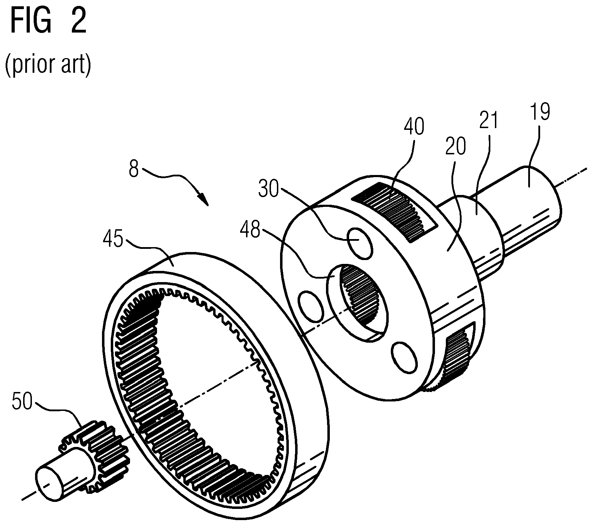

Figure 2 shows a planet stage 8 as known in the prior art. An input shaft 19 transmits torque to a planet carrier 20 via an input shaft connection 21. Attached to the planet carrier 20 are planet shafts 30, on which planet wheels 40 are rotatably mounted. In operation, the planet carrier 20 turns around its rotation axis indicated by the dashed-dotted line going through the sun wheel 50. In the shown embodiment, three planet shafts 30 and three planet wheels 40 are connected to the planet carrier 20. For operation, the hollow wheel 45 will be arranged around the planet carrier 20 and the planets 40 are meshing with the hollow wheel 45. The sun wheel 50 will be introduced in the center of the planet carrier 20 in the sun wheel opening 48 so that the planet wheels 40 are meshing with the sun wheel 50. In some embodiments, the sun wheel 50 is connected to the high-speed shaft 10, in other embodiments, the sun wheel 50 is connected to a different shaft, e.g., an intermediate shaft.

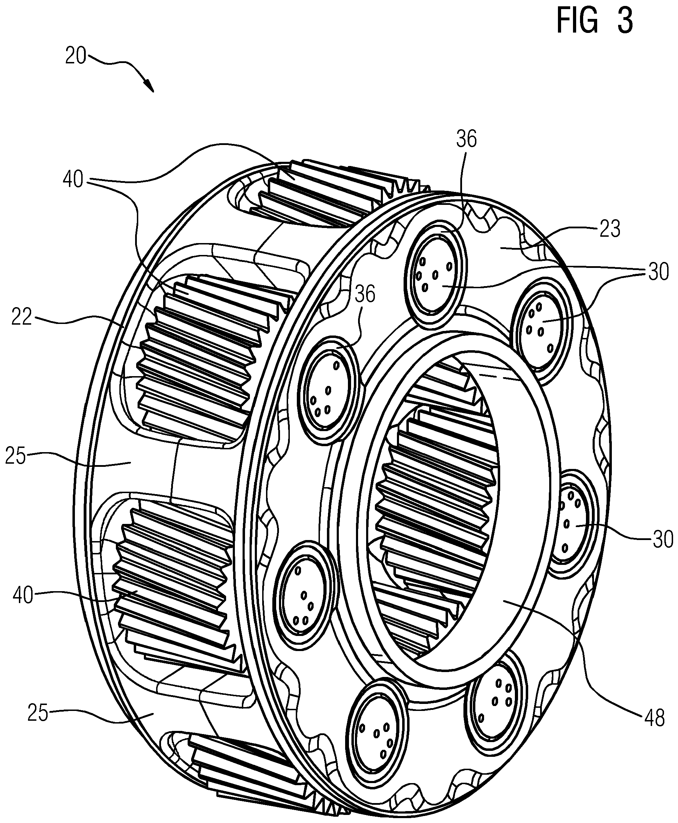

Figure 3 shows a preferred first embodiment of parts of the wind turbine gearbox 7 in a perspective view from the generator side, where the sun wheel opening 48 can be seen.

In the shown embodiment, the planet carrier 20 contains seven planet shafts 30 with seven planet wheels 40. As the planet carrier 20 is shown from the generator side, only the generator side plate 23 containing the elastic elements 34 on the generator side can be seen. Seven elastomer rings 36 are mounted in the planet carrier 20. The ends of each planet shaft 30 are mounted inside the central hole of the elastic element 34.

In this embodiment, the planet carrier 20 has seven columns 25 integrally connecting the generator side plate 23 with the rotor side plate 22, which is in this view mostly hidden by the columns 25 and the planet wheels 40.

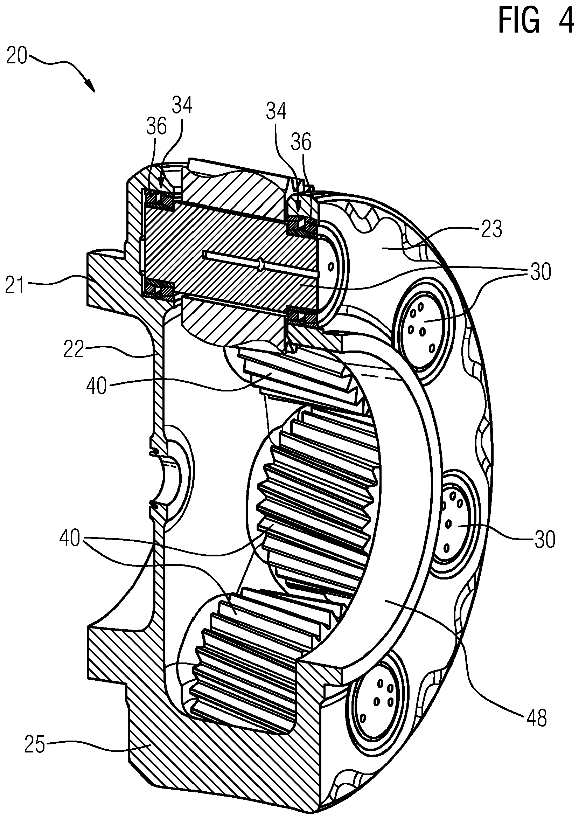

Figure 4 shows the first embodiment of the wind turbine gearbox 7 in a sectional perspective view.

The planet carrier 20 has a rotor side plate 22 and a generator side plate 23 which are integrally connected by columns 25.

In a preferred embodiment, the input shaft connection 21 is integrally connected to the rotor side plate 22 of the planet carrier 20.

A pair of elastic elements 34 is mounted in the planet carrier 20, and both ends of the planet shafts 30 are mounted in one of the elastic elements 34 which are mounted in the planet carrier 20.

In this embodiment, the elastic elements 34 are of cylindrical shape with a central hole in which the planet shafts 30 are mounted. The outer surface of the cylinder is mounted inside the planet carrier 20. The elastic elements 34 comprise preferably one elastomer ring 36. In other preferred embodiments, the elastic elements comprise two to five elastomer rings 36 to allow for a standardized production of the elastomer rings 36.

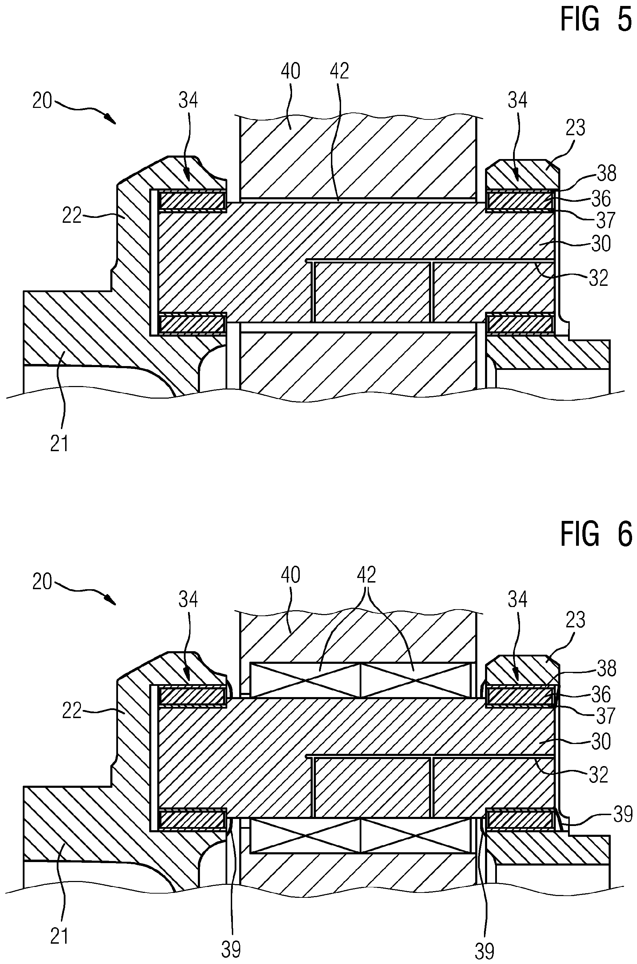

Figure 5 shows another preferred embodiment of the wind turbine gearbox 7 in a sectional view, in which more details of the elastic elements 34 are visible.

Each elastic element 34 of the pair of elastic elements 34 is of cylindrical shape with a central hole wherein the planet shafts 30 are mounted.

In the shown preferred embodiment, each elastic element 34 comprises an elastomer ring 36, an inner metallic ring 37 and an outer metallic ring 38.

Preferably, both elastic bearings 34 of the shown pair of elastic bearings 34 are identical in shape and dimensions, which means that identical parts are used for the elastic elements 34 on the rotor side and the generator side of the planet carrier 20, as shown in Fig. 5.

Preferably an elastomer ring 36 out of rubber material is vulcanized between the inner ring 37 and the outer ring 38 to join the elastomer ring 36 with the metallic rings 37, 38.

Preferably, the elastomer ring 36 is precalibrated in the metallic rings 37, 38, allowing advantageously for a higher durability against dynamic loading.

Preferably, the elastomer ring 36 comprises at least two ring segments, like e.g., half rings or quarter rings. Such a design is known to the expert in the art for other applications, e.g., the mounting of the torque arms of a wind turbine gear box on a machine frame. It advantageously allows for simpler manufacturing of precalibrated elastomer rings 36.

In this preferred embodiment, the planet wheel 40 is mounted on the planet shaft 30 with a planet bearing 42 which is a journal bearing. The journal bearing is lubricated via a lubrication bore 32 inside the planet shaft 30 with two radial lubrication exits for lubricating the bearing surface between the planet wheel 40 and the planet shaft 30. As can be seen in Fig. 5, journal bearings as planet bearings 42 allow for a very compact design. In Fig. 5, the upper gap of journal planet bearing 42 is shown a bit smaller than the lower gap, what might be due to gravitation load of the planet wheel or a higher radial load from the hollow wheel compared to the radial load from the sun wheel. In the same way, an unsymmetric load over the width of the planet might result in a small inclination of the planet wheel 40. Such an inclination of the planet wheel 40 relative to the planet shaft 30 would be a high risk for the journal bearing, as the edges of the planet wheel 40 in the gap might get into contact with the planet shaft 30, resulting in mayor destruction of the planet bearing 42. The inventive elastic mounting of the planet shaft 30 in the planet carrier 20 allows in such situations that the planet shaft 30 follows the inclination of the planet wheel 40, initiated by the oil pressure in the gap of the planet bearing 42, to prevent such contact risk between the planet wheel 40 and the planet shaft 30.

Figure 6 shows another preferred embodiment of the wind turbine gearbox 7 in a sectional view. In contrast the embodiment of Fig. 5, in this embodiment the planet bearing 42 comprises a pair of roller bearings. Roller bearings are a proven and reliable technology for planet bearings 42 in a wind turbine gearbox 7. In addition, the embodiment of Fig 6 includes sealings 39 which seal the elastic elements 34 against an inner space of the wind turbine gearbox 7. In this way, elastic elements 34 with rubber materials are advantageously protected against negative impacts of the exposure to chemicals like the lubrication fluids inside the wind turbine gearbox 7. The sealings 39 as shown in Fig. 6 or in any other form of the many sealing embodiments known in the art can advantageously be added to any of the inventive embodiments shown in this patent filing.

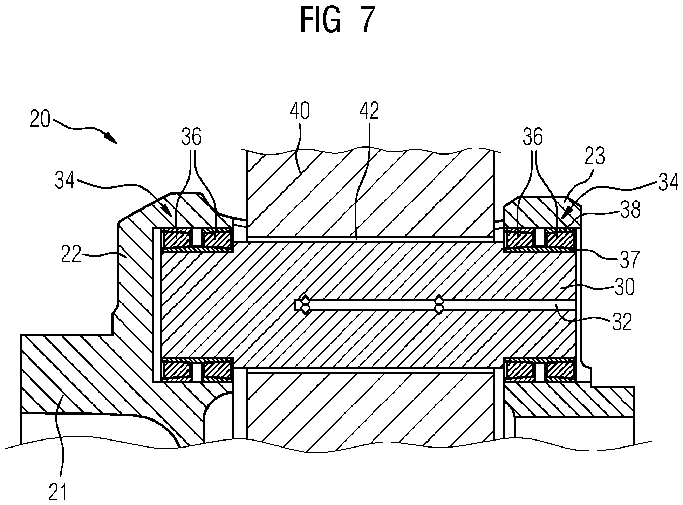

Figure 7 shows another preferred embodiment of the wind turbine gearbox 7 in a sectional view.

In this preferred embodiment, each elastic element 34 comprises two elastomer rings 36. Providing more than one elastomer ring 36 for an elastic element 34 advantageously allows for simpler manufacturing. Standardized elastomer rings 36 might be used for different applications.

In the shown embodiment, the inner metallic ring 37 is a joint ring for both elastomer rings 36, whereas the outer metallic rings 38 are separated for each elastomer ring 36.

In preferred embodiments joint or separated inner metallic rings 37 or joint or separated outer metallic rings 38 can be used. Joint metallic rings advantageously simplify the assembly and disassembly of the elastic element 34. Separated rings advantageously simplify the manufacturing, as an arbitrary number of single elastomer rings 34 can be joint into one elastic element 34 without the need of special parts.

In a preferred embodiment, the elastic elements 34 in a pair of elastic elements 34 comprise different numbers of elastomer rings 36, advantageously allowing for adaptation to non-symmetric loading conditions of the planet shaft.

If the planet wheel 40 is to be placed asymmetrically between the rotor side plate 22 and the generator side plate 23 of the planet carrier 22, providing e.g., two elastomer rings 36 on one side and three elastomer rings 36 on the other side of the planet shaft 30 can compensate for this asymmetry.

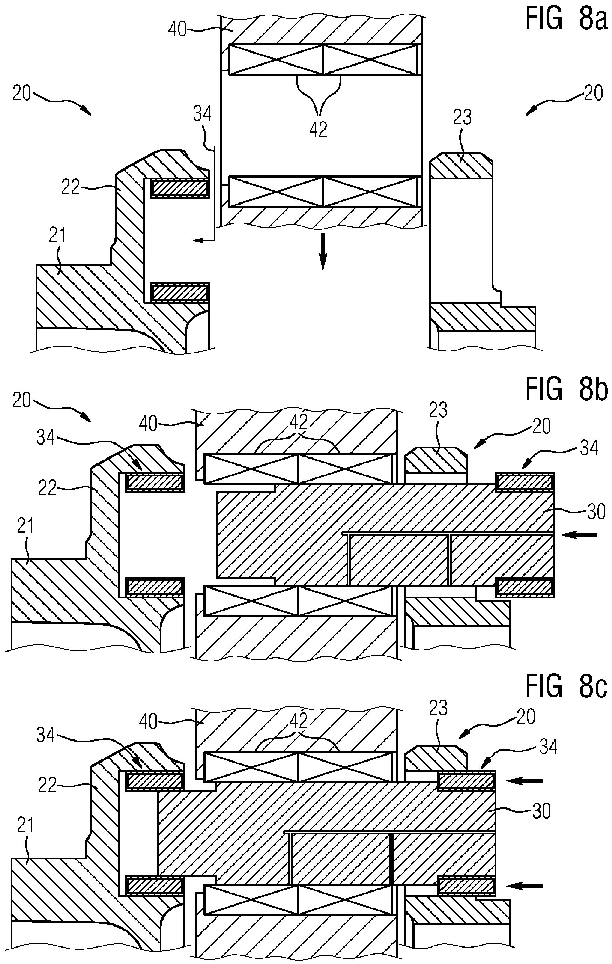

Figure 8 a-c show the mounting steps of a preferred method to mount a wind turbine gear box 7 according to the invention. Figure 8a shows a rotor side elastic element 34 which is mounted in the rotor side plate 22 of the planet carrier 20 in a first step, as indicated by the flash at the reference number 34.

Preferably, the planet shaft 30 is heated up at least locally for this step to simplify the mounting of the elastic element 34. As the elastic element 34 is in most cases temperature sensitive, the heating temperature of the planet carrier 20 must be controlled carefully not to exceed more than 100 - 150°C.

In a second step, the planet wheel 40 including planet bearings 42 is placed inside the planet carrier 20, as indicated by the vertical flash in Figure 8a.

Figure 8b shows the step of pushing the planet shaft 30 into the planet carrier 20 through the planet wheel 40 including planet bearings 42.

Preferably, the planet shaft 30 is cooled down at least locally, preferably completely, for this step to simplify the mounting.

Preferably, the mounting step shown in Figure 8b is performed when the planet carrier 20 is turned in a position with the rotation axis vertically and the generator side plate 23 upside, what means turning it 90 degrees in counterclockwise direction in the shown view. Though, the flash on the right side of the drawing will point in direction of gravity, what allows the pushing step being executed just by lowering the planet shaft 30 with a crane in vertical direction, minimizing in this way the risk of canting the planet shaft 20 in the planet bearings 42 or the elastic elements 34.

Preferably, the generator side elastic element 34 is already premounted on the planet shaft 30 before pushing it through the planet wheel 40.

Figure 8c shows the final phase of the mounting of the planet shaft 30. The rotor side end of the planet shaft 30 is pushed into the rotor side elastic element 34. At the same time, the generator side elastic element 34 is mounted by pushing it into the generator side plate 23 of the planet carrier 20. As indicated by the two flashes, this is preferably done by a specific tool pushing directly on the sides of the rotor side elastic element 34.

### Reference list

- 1: Wind Turbine
- 2: Tower
- 3: Nacelle
- 4: Rotor
- 5: Rotor Blade
- 6: Rotor Shaft
- 7: Wind Turbine Gearbox
- 8: Planet Stage
- 9: Generator
- 10: High-Speed Shaft
- 19: Input Shaft
- 20: Planet Carrier
- 21: Input Shaft Connection
- 22: Rotor Side Plate
- 23: Generator Side Plate
- 25: Column
- 30: Planet Shaft
- 32: Lubrication Bore
- 34: Elastic Element
- 36: Elastomer Ring
- 37: Inner Metallic Ring
- 38: Outer Metallic Ring
- 39: Sealing
- 40: Planet Wheel
- 42: Planet Bearing
- 45: Hollow Wheel
- 48: Sun Wheel Opening
- 50: Sun Wheel

## Claims

1. A wind turbine gearbox (7) for transmitting torque from a rotor (4) to a generator (9) comprising
a planet carrier (20)
at least three planet shafts (30),
at least three planet wheels (40) mounted on the planet shafts (30),
a hollow wheel (45) and
at least three pairs of elastic elements (34),
wherein the planet wheels (40) mesh with the hollow wheel (45),
wherein the pairs of elastic elements (34) are mounted in the planet carrier (20),
wherein both ends of each planet shaft (30) are mounted in at least one elastic element (34) and each elastic element (34) is mounted in the planet carrier (20).

2. The wind turbine gearbox (7) according to claim 1, wherein the elastic elements (34) are of cylindrical shape with a central hole, wherein the planet shafts (30) are mounted inside the central hole and the outer surface of the cylinder is mounted in the planet carrier (20).

3. The wind turbine gearbox (7) according to one of the preceding claims, wherein the elastic elements (34) comprise at least an elastomer ring (36).

4. The wind turbine gearbox (7) according to claim 3, wherein the elastic elements (34) further comprise a metallic inner ring (37) and/or a metallic outer ring (38), wherein the elastomer ring (36) is joint with the metallic inner ring (37) and/or the metallic outer ring (38) .

5. The wind turbine gearbox (7) according to claim 3 or 4,
wherein the elastomer ring (36) is precalibrated.

6. The wind turbine gearbox (7) according to any of the claims 3 to 5, wherein the elastomer ring (36) comprises rubber, in particular NBR rubber or a fluoroelastomer.

7. The wind turbine gearbox (7) according to any of the claims 3 to 6, wherein the elastomer ring (36) comprises at least two ring segments.

8. The wind turbine gearbox (7) according to any of the claims 3 to7, wherein the elastic element (34) comprises a plurality of elastomer rings (36).

9. The wind turbine gearbox (7) according to one of the preceding claims, wherein the planet carrier (20) has a rotor side plate (22) and a generator side plate (23) which are integrally connected by columns (25).

10. The wind turbine gearbox (7) according to one of the preceding claims, wherein the elastic element (34) is sealed against an inner space of the wind turbine gearbox (7).

11. The wind turbine gearbox (7) according to one of the preceding claims, wherein the planet wheels (40) are mounted on the planet shafts (30) with journal bearings.

12. A wind turbine (1) comprising a wind turbine gearbox (7) according to any of the preceding claims.

13. A method of mounting a wind turbine gearbox (7), in particular according to one of the previous claims, comprising the steps of:
- mounting the rotor side elastic element (34) in the planet carrier (20),
- placing the planet wheel (40) with the planet bearing (42) inside the planet carrier (20),
- pushing the planet shaft (30) through the planet wheel (40) and the planet bearing (42), and
- mounting the elastic element (34) on the generator side of the planet carrier (20).

14. The method of mounting the wind turbine gearbox (7) according to the previous claim, wherein the method further comprises at least one of the following steps:
- turning the planet carrier (20) in a position with the rotation axis vertically and the generator side plate (23) of the planet carrier (20) upside,
- at least locally heating up the planet carrier (20), or
- at least locally cooling down the planet shaft (30).

15. The method of mounting the wind turbine gearbox (7) according to claims 13 or 14, wherein the method further comprises the step of mounting the generator side elastic element (34) before pushing the planet shaft (30) through the planet wheel (40).
